# DEMANDE DE BREVET EUROPEEN

(11) **EP 2 285 045 A1**
(43) Date de publication de la demande: **16.02.2011**
(21) Numéro de dépôt: 10168512.1
(22) Date de dépôt: 06.07.2010
(51) Int. Cl.: H04L 12/10, H02G 15/18, H01R 13/658, H02G 15/103, H01R 4/64, G06F 1/26

(54) **Procédé de téléalimentation d'un terminal dans un réseau informatique local**

(30) Priorité: 13.08.2009 FR 0955654
(71) Demandeur: Alcatel Lucent, 75007 Paris (FR)
(72) Inventeur: Blondel, Thomas, 78141 Velizy (FR); Fan, Yunli, 610041 Chengdu (CN); Jeandon, Thiebault, 78141 Velizy (FR); Franchi, Alberto, 20059 Vimercate (IT)
(74) Mandataire: Sciaux, Edmond

(57) **Abrégé**

Ce procédé de téléalimentation d'un terminal (PD1) dans un réseau informatique local, consiste à fournir de l'énergie à ce terminal via au moins un conducteur (A1, A2 ; B1, B2 ; C1, C2 ; D1, D2) d'un câble (C) reliant ce terminal à un réseau local informatique pour émettre/recevoir des données ; et consiste en outre à transmettre de l'énergie à ce terminal via un écran (S) entourant ledit câble (C).

## Description

L'invention a trait à la téléalimentation des terminaux dans les réseaux informatiques locaux, par exemple de type Ethernet. Plus précisément, elle concerne un procédé de téléalimentation d'un terminal dans un réseau informatique local, ainsi qu'un dispositif de téléalimentation et un terminal adaptés pour la mise en oeuvre de ce procédé.

Dans un réseau informatique ordinaire, les équipements connectés à un réseau local, tels qu'ordinateurs, points d'accès sans fil, caméras, etc., sont alimentés localement par le secteur, indépendamment des liaisons de données du réseau.

Pour éviter d'installer un câble spécifique pour l'alimentation, des solutions de téléalimentation des terminaux ont été proposées. Citons par exemple, pour les réseaux Ethernet, la norme *803.2*α*f* de l'*IEEE*, également appelé PoE, *Power over Ethernet,* qui propose d'alimenter les équipements par le câble Ethernet lui-même.

Un câble Ethernet est composé de 4 paires de fils. Les données transitent sur deux paires seulement lorsque la transmission est faite selon la norme 10BASE-T ou 100BASE-TX, et sur quatre paires lorsque la transmission est faite selon la norme 1000BASE-T (Gigabit Ethernet). Le procédé de téléalimentation selon la norme IEEE 802.3af permet de fournir une tension nominale de 48 V (avec 12 W de puissance, voire plus), via le câble Ethernet transmettant des données.

Lorsque la transmission est faite selon la norme 10BASE-T ou 100BASE-TX, le procédé selon la norme IEEE 802.3af consiste à utiliser une paire des deux paires de conducteurs qui ne sont pas utilisées pour la transmission de données. Une technique dite de circuit fantôme ou « phantom power » permet également de transporter le courant à travers une paire utilisée pour la transmission de données. Ceci permet donc une téléalimentation lorsqu'une transmission de données est faite selon la norme 1000BASE-T, utilisant les quatre paires pour la transmission de données.

La téléalimentation réalisée selon la norme *803.2*α*f* de l'*IEEE* fournit un maximum de 400 mA et une puissance maximum de 15.4 W. En général, seulement 12.94 W sont disponibles après une déperdition de 10 à 20 % de l'énergie disponible dans la résistance des câbles par effet Joule.

Les terminaux téléalimentables sont classés en « classes » de puissance, en fonction de la puissance maximale consommée.

Les terminaux téléalimentables intègrent une signature spécifique, dite signature de téléalimentation (par exemple sous forme d'une impédance prédéterminée), caractéristique de la puissance maximale consommée par le terminal. La détection, par le dispositif de téléalimentation, de la signature de téléalimentation d'un terminal, entraîne l'allocation à celui-ci d'une puissance correspondant à la classe du terminal. Par défaut, les terminaux se voient attribuer la classe 0. En d'autres termes, la puissance allouée par défaut à un équipement téléalimenté est de 15,4 W, à la sortie du dispositif de téléalimentation.

| Classe | Puissance maximale à l'entrée du dispositif alimenté |
|---|---|
| 0 | 0.44 à 12.94 W |
| 1 | 0.44 à 3.84 W |
| 2 | 3.84 to 6.49 W |
| 3 | 6.49 to 12.95W |
| 4 | Réserve |
| | |

| Classe | *Puissance minimale à la sortie du dispositif de téléalimentation* |
|---|---|
| 00 | *15,4 W* |
| 11 | *4,0 W* |
| 22 | *7,0 W* |
| *33* | *15,4 W* |

Dans les faits, l'éventail des équipements pouvant être télé-alimentés est encore relativement limité : Téléphones IP, Bornes Wi-Fi, caméras vidéo (fixes) représentent la majorité des clients potentiels.

Des évolutions sont en cours de normalisation par l'IEEE 802.3at Task Force. La nouvelle norme devrait prendre en compte l'utilisation de deux paires du câble Ethernet pour fournir un courant de 600 mA et une puissance de 25 W au terminal téléalimenté. Ceci permettra d'élargir les applications : Des équipements comme des transmetteurs WiMAX, caméras motorisées, vidéophones, ou ordinateurs portables, etc. Ils pourraient recevoir ainsi une puissance correspondant à leur besoin.

Le but de l'invention est de permettre de transmettre encore plus de puissance pour élargir encore les applications de la téléalimentation, notamment sur des liaisons Ethernet.

L'objet de l'invention est un procédé de téléalimentation d'un terminal dans un réseau informatique local, consistant à fournir de l'énergie à ce terminal via au moins un conducteur d'un câble reliant ce terminal à un réseau local informatique pour émettre/recevoir des données ; **caractérisé en ce qu**'il consiste en outre à transmettre de l'énergie à ce terminal via un écran entourant ledit câble.

L'invention a aussi pour objet un dispositif de téléalimentation (commutateur, routeur, etc) comportant des moyens pour la mise en oeuvre du procédé selon l'invention ; et un terminal téléalimentable comportant des moyens pour la mise en oeuvre du procédé selon l'invention.

L'invention sera mieux comprise et d'autres caractéristiques apparaîtront à l'aide de la description ci-dessous et des figures l'accompagnant :
- la figure 1 est un schéma synoptique montrant l'association d'un premier exemple de réalisation du dispositif de téléalimentation selon l'invention et d'un premier exemple de réalisation du terminal téléalimentable, selon l'invention.
- la figure 2 est un schéma synoptique montrant l'association d'un deuxième exemple de réalisation du dispositif de téléalimentation selon l'invention et d'un deuxième exemple de réalisation du terminal téléalimentable, selon l'invention.
- la figure 3 est un schéma synoptique montrant l'association d'un troisième exemple de réalisation du dispositif de téléalimentation selon l'invention et d'un troisième exemple de réalisation du terminal téléalimentable, selon l'invention.

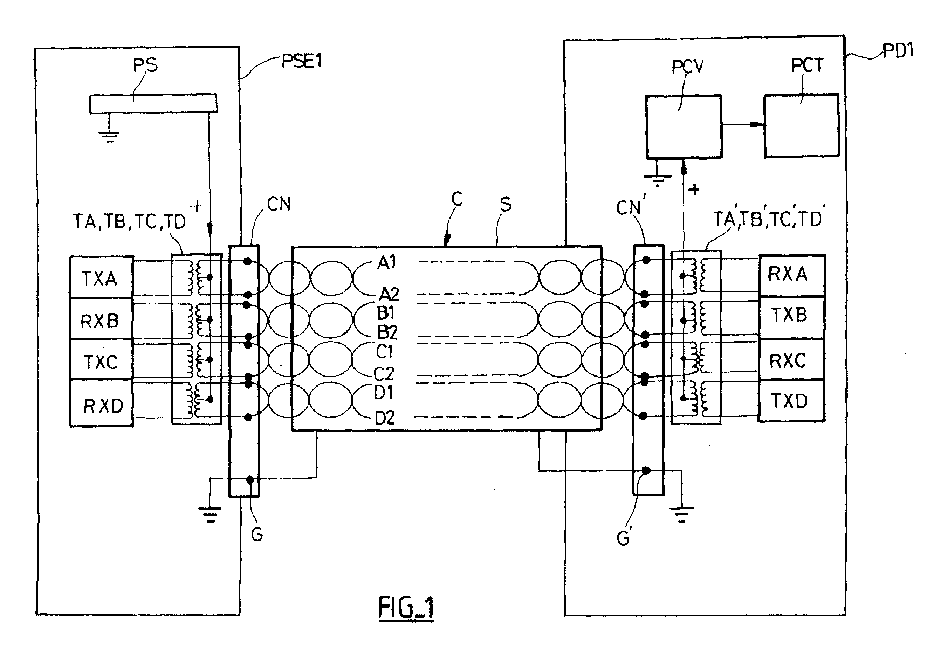

La **figure 1** représente le schéma synoptique d'un premier exemple de réalisation PSE1 de dispositif de téléalimentation, selon l'invention, et d'un premier exemple de réalisation PD1 de terminal téléalimentable, selon l'invention, pour une téléalimentation via quatre circuits fantômes et via l'écran S d'un câble de liaison Ethernet C. Ce dispositif de téléalimentation PSE1 peut être un commutateur Ethernet, un répéteur, un routeur, etc, conforme à la norme 100BASE-TX, dans cet exemple. Ce terminal PD1 peut être un émetteur-récepteur WiMax, une caméra vidéo orientable à distance, etc.

Le câble C comporte quatre paires :
- A1, A2 utilisée principalement pour transmettre des données vers le terminal PD, en mode différentiel,
- B1, B2 utilisée principalement pour transmettre des données vers le diapositif de téléalimentation PSE, en mode différentiel,
- C1, C2 utilisée principalement pour transmettre des données vers le terminal PD, en mode différentiel,
- D1, D2 utilisée principalement pour transmettre des données vers le diapositif de téléalimentation PSE, en mode différentiel.

Le câble C comporte en outre l'écran métallique classique S l'entourant sur toute sa longueur.

Le dispositif de téléalimentation PSE1 comprend :
- Une alimentation PS alimentée par le secteur, par exemple.
- Deux émetteur de données TXA et TXC.
- Deux récepteurs de données RXB et RXD.
- Quatre transformateurs TA, TB, TC, TD, ayant chacun un premier enroulement à point milieu et un second enroulement.
- Un connecteur N, à huit contacts pour les données et un contact G pour l'écran S.

Il comporte en outre des moyens pour détecter la présence d'un terminal télé-alimentable et identifier sa classe de puissance. Ils ne sont pas représentés ni décrits car ils sont classiques.

Les deux bornes extrêmes des premiers enroulements des transformateurs TA, TB, TC, TD sont reliées respectivement à une paire de conducteurs, respectivement A1, A2 ; B1, B2 ; C1, C2 ; D1, D2 ; via le connecteur CN. Les deux bornes des seconds enroulements des transformateurs TA, TC, sont reliées respectivement à deux bornes des transmetteurs de données TXA, TXC. Les deux bornes des seconds enroulements des transformateurs TB, TD, sont reliées respectivement à deux bornes des récepteurs de données RXB, RXD. Les points milieux des premiers enroulements des transformateurs TA, TB, TC, TD sont tous reliés à la borne positive de l'alimentation PS qui fournit une tension comprise entre 36 et 57 V. L'écran S du câble C est relié à la borne de référence de l'alimentation PS via le contact G du connecteur CN.

Le terminal téléalimentable PD1 comprend :
- Des circuits électroniques PCT qui doivent être alimentés.
- Un convertisseur de tension PCV relié aux circuits électroniques PCT pour leur fournir une tension stabilisée à une valeur prédéterminée, 12 V par exemple.
- Deux émetteur de données TXB et TXD.
- Deux récepteurs de données RXA et RXC.
- Quatre transformateurs TA', TB', TC', TD', ayant chacun un premier enroulement à point milieu et un second enroulement.
- Un connecteur N', à huit contacts pour les données et un contact G' pour l'écran S.

Il comporte en outre des moyens pour signaler la présence du terminal télé-alimentable et indiquer sa classe de puissance. Ils ne sont pas représentés ni décrits car ils sont classiques.

Les deux bornes extrêmes des premiers enroulements des transformateurs TA', TB', TC', TD' sont reliées respectivement à une paire de conducteurs, respectivement A1, A2 ; B1, B2 ; C1, C2 ; D1, D2 ; via le connecteur CN'. Les deux bornes des seconds enroulements des transformateurs TA', TC', sont reliées respectivement à deux bornes des récepteurs de données RXA, RXC. Les deux bornes des seconds enroulements des transformateurs TB', TD', sont reliées respectivement à deux bornes des transmetteurs de données TXB, TXD. Les points milieux des premiers enroulements des transformateurs TA', TB', TC', TD' sont tous reliés à la borne positive du convertisseur de tension PCV. L'écran S du câble C est relié à la borne de référence du convertisseur de tension PCV via le contact G' du connecteur CN'.

Les paires A1, A2 ; B1, B2 ; C1, C2 ; et D1, D2 sont utilisées en mode commun pour téléalimenter le terminal PD1 par quatre circuits fantômes fournissant chacun 850 mA et une tension nominale de 48V à l'entrée du terminal, soit une puissance d'environ 160 W. Dans cet exemple, les quatre circuits fantômes sont reliés à la borne positive de l'alimentation PS dans le dispositif de téléalimentation PSE1, et sont reliés à la borne positive du convertisseur de tension PCV dans le terminal PD. L'écran S du câble C est relié à la borne de référence de cette alimentation PS, et il est relié à la borne de référence du convertisseur de tension PCV.

Dans cet exemple de réalisation, les conducteurs du câble C sont supposés être de qualité telle qu'ils aient des différences de résistance négligeable, afin que les conducteurs supportent des dissipations thermiques (dues à l'effet joule) à peu près égales. Dans d'autres modes de réalisation, l'alimentation PS peut être scindée en quatre alimentations indépendantes ayant chacune un dispositif de régulation de courant séparé et relié respectivement à un seul circuit fantôme, pour réguler séparément le courant de téléalimentation passant dans chaque circuit fantôme.

Pour une liaison selon la norme 1000BASE-TX, chaque conductuer transmet des donnéees bi-directionnellement. Dans un mode de réalisation adapté à la norme 1000BASE-TX, la seule différence consiste à remplacer chacun des transmetteurs de données et chacun des récepteurs de données par un émetteur-récepteur de données.

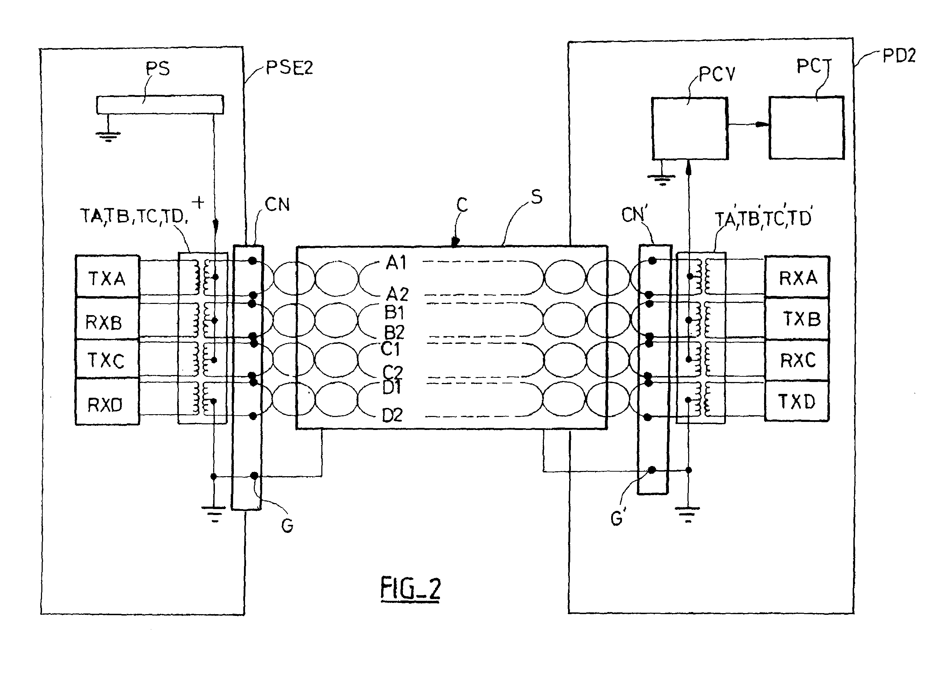

La **figure 2** est un schéma synoptique montrant l'association d'un deuxième exemple de réalisation PSE2 du dispositif de téléalimentation selon l'invention et d'un deuxième exemple de réalisation PD2 du terminal téléalimentable, selon l'invention. Les différences par rapport au premier exemple sont les suivantes :
Les points milieux des premiers enroulements des transformateurs TA, TB, TC, sont tous reliés à la borne positive de l'alimentation PS qui fournit une tension comprise entre 36 et 57 V. Le point milieu du premier enroulement du transformateur TD est relié à la borne de référence de l'alimentation PS.
Les points milieux des premiers enroulements des transformateurs TA', TB', TC', sont tous reliés à la borne positive du convertisseur de tension PCV. Le point milieu du premier enroulement du transformateur TD' est relié à la borne de référence du convertisseur de tension PCV. Les paires A1, A2 ; B1, B2 ; C1, C2 sont utilisées en mode commun pour téléalimenter le terminal PD2 par trois circuits fantômes fournissant chacun 850 mA et une tension nominale de 48V à l'entrée du terminal, soit une puissance d'environ 120 W.

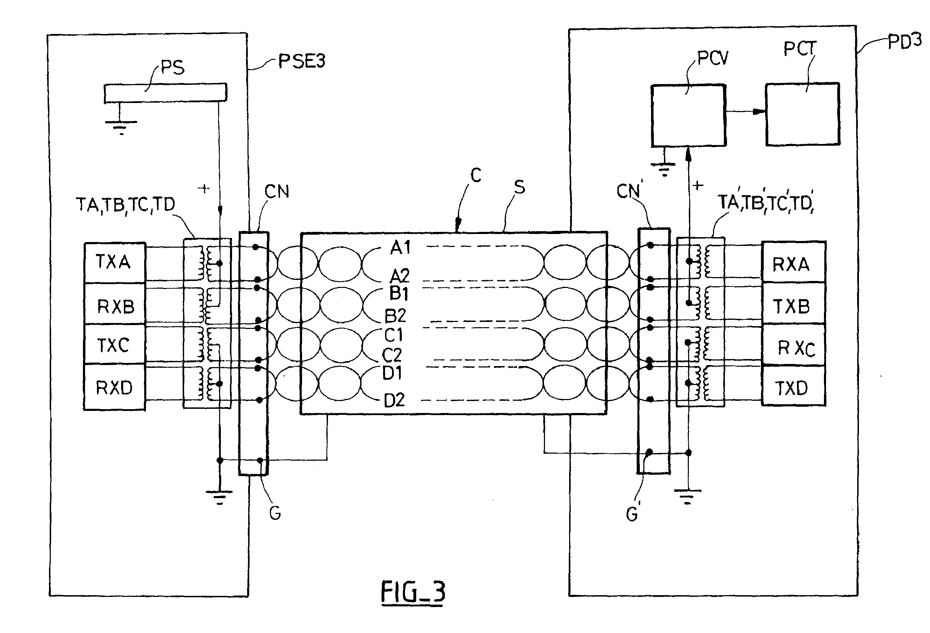

La **figure 3** est un schéma synoptique montrant l'association d'un troisième exemple de réalisation PSE3 du dispositif de téléalimentation selon l'invention et d'un troisième exemple PD3 de réalisation du terminal téléalimentable, selon l'invention. Les différences par rapport au premier exemple sont les suivantes :
Les points milieux des premiers enroulements des transformateurs TA et TB sont reliés à la borne positive de l'alimentation PS qui fournit une tension comprise entre 36 et 57 V. Les points milieux des premiers enroulements des transformateurs TC et TD sont relié à la borne de référence de l'alimentation PS.
Les points milieux des premiers enroulements des transformateurs TA' et TB' sont tous reliés à la borne positive du convertisseur de tension PCV. Les points milieux des premiers enroulements des transformateur TC' et TD' sont reliés à la borne de référence du convertisseur de tension PCV. Les paires A1, A2 et B1, B2 sont utilisées en mode commun pour téléalimenter le terminal PD3 par deux circuits fantômes fournissant chacun 850 mA et une tension nominale de 48V à l'entrée du terminal, soit une puissance d'environ 80 W.

## Revendications

1. Procédé de téléalimentation d'un terminal (PD1) dans un réseau informatique local, consistant à fournir de l'énergie à ce terminal via au moins un conducteur (A1, A2 ; B1, B2 ; C1, C2 ; D1, D2) d'un câble (C) reliant ce terminal à un réseau local informatique pour émettre/recevoir des données ; **caractérisé en ce qu'**il consiste en outre à transmettre de l'énergie à ce terminal via un écran (S) entourant ledit câble (C).

2. Dispositif de téléalimentation (PSE1) comportant des moyens (PS, TA, TB, TC, TD, CN) pour fournir de l'énergie à un terminal via au moins un conducteur (A1, A2 ; B1, B2 ; C1, C2 ; D1, D2) d'un câble (C) reliant ce terminal à un réseau local informatique pour émettre/recevoir des données ; **caractérisé en ce que** lesdits moyens pour fournir de l'énergie comportent des moyens (G) susceptibles de fournir de l'énergie à un terminal via un écran (S) entourant ledit câble (C).

3. Terminal (PD1) comportant des moyens (CN', TA', TB', TC', TD4, PCV) pour recevoir de l'énergie fournie par un dispositif de téléalimentation via au moins un conducteur (A1, A2 ; B1, B2 ; C1, C2 ; D1, D2) d'un câble (C) reliant ce terminal à un réseau local informatique pour émettre/recevoir des données ; **caractérisé en ce que** lesdits moyens pour recevoir de l'énergie comportent des moyens (G') susceptibles de recevoir de l'énergie via un écran (S) entourant ledit câble (C).
